(19)

Europäisches
Patentamt
European
Patent Office
Office européen
des brevets

(11) **EP 2 193 610 B1**

(12) **EUROPEAN PATENT SPECIFICATION**

(45) Date of publication and mention
of the grant of the patent:
**12.08.2015 Bulletin 2015/33**

(51) Int Cl.:
***H04B 7/02*** (2006.01)          ***H04B 7/06*** (2006.01)

(21) Application number: **07817025.5**

(22) Date of filing: **29.09.2007**

(86) International application number:
**PCT/CN2007/070834**

(87) International publication number:
**WO 2009/043214 (09.04.2009 Gazette 2009/15)**

(54) **METHOD FOR COMMUNICATING CHANNEL STATE INFORMATION**

VERFAHREN ZUM ÜBERMITTELN VON KANALZUSTANDSINFORMATIONEN

PROCÉDÉ DE COMMUNICATION D'INFORMATIONS D'ÉTAT DE CANAL

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**09.06.2010 Bulletin 2010/23**

(73) Proprietor: **Huawei Technologies Co., Ltd.
Longgang District
Shenzhen, Guangdong 518129 (CN)**

(72) Inventors:
• **VAN DE BEEK, Jaap
16494 Stockholm (SE)**
• **WENNSTROM, Mattias
16494 Stockholm (SE)**
• **OLOFSSON, Henrik
16494 Stockholm (SE)**

(74) Representative: **Isarpatent
Patentanwälte Behnisch Barth Charles
Hassa Peckmann & Partner mbB
Postfach 44 01 51
80750 München (DE)**

(56) References cited:
**CN-A- 1 708 149       US-A1- 2005 041 608
US-A1- 2006 034 240**

• **"3rd Generation Partnership Project; Technical
Specification Group Radio Access Network;
Evolved Universal Terrestrial Radio Access (E-
UTRA); Physical layer procedures (Release 8)"
3GPP STANDARD; 3GPP TS 36.213, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. V2.1.0, 1 September 2007
(2007-09-01), pages 1-13, XP050377458**
• **KWON J H ET AL: "A PRAGMATIC ADAPTIVE
TRANSMISSION SCHEME WITH LOW-RATE
FEEDBACK USING TWO-STEP PARTIAL CQI
FOR MULTIUSER OFDMA SYSTEMS" IEICE
TRANSACTIONS ON COMMUNICATIONS,
COMMUNICATIONS SOCIETY, TOKYO, JP LNKD-
DOI:10.1093/IETCOM/E90-B.2.405, vol. E90B, no.
2, 1 February 2007 (2007-02-01), pages 405-407,
XP001505226 ISSN: 0916-8516**
• **ERICSSON ET AL: "Way forward for CQI
reporting" 3GPP DRAFT; R1-073844, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Athens,
Greece; 20070829, 29 August 2007 (2007-08-29),
XP050107412 [retrieved on 2007-08-29]**
• **HOON KIM ET AL: "An Opportunistic Channel
Quality Feedback Scheme for Proportional Fair
Scheduling" IEEE COMMUNICATIONS LETTERS,
IEEE SERVICE CENTER, PISCATAWAY, NJ, US
LNKD-DOI:10.1109/LCOMM.2007.070106, vol. 11,
no. 6, 1 June 2007 (2007-06-01), pages 501-503,
XP011186246 ISSN: 1089-7798**

**EP 2 193 610 B1**

- **MYEON-GYUN CHO ET AL: "A CQI Feedback Reduction Scheme for Multi-User MIMO/OFDMA Systems" IEEE INTERNATIONAL SYMPOSIUM ON PERSONAL, INDOOR AND MOBILE RADIO COMMUNICATIONS. PIMRC, IEEE; PI, XX LNKD-DOI:10.1109/PIMRC.2007.4394089, 1 September 2007 (2007-09-01), pages 1-7, XP031168422 ISBN: 978-1-4244-1143-6**
- **NOKIA (TO BE REPLACED BY RAN WG4 ET AL: "[DRAFT] LS on CQI reporting requirements for E-UTRA UE" 3GPP DRAFT; R1-072650 (R4-070802), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20070619, 19 June 2007 (2007-06-19), XP050106347 [retrieved on 2007-06-19]**

**Description**

**Field of the Invention**

The present invention relates to a method of communicating channel state information method in a communication system, in particular a cellular communication system. The present invention further relates to a communication system, and a user entity.

**Background of the Invention**

In cellular communication, downlink performance, i.e., communication from a base station to user entities, such as mobile phones, smartphones or handheld computers having communication capabilities can, in general, be improved by signalling downlink channel state information from the mobile terminal to the base station over a communication channel from user entity to base station (i.e., an uplink channel). In packet-based Multiple Input Multiple Output (MIMO) systems, the base station typically uses this information for proper decisions about the user scheduling, the MIMO settings, modulation and coding choices.

In 3GPP's Long Term Evolution (LTE) standardization work, two different uplink channels are currently used for the feedback of channel state information.

The first of these channels is the physical uplink control channel (PUCCH). This channel is transmitted at predefined time instants (periodically). The message size available for a user entity is relatively small, about 10 bits per message. This is because the PUCCH channel has to accommodate channel state information, such as channel quality information (CQI) feedback messages for all users in the cell, and the uplink capacity is therefore limited since the number of users in a cell can be considerable. Due to the rather short message size, a message on the PUCCH only roughly describes the downlink channel. Information about the channel's frequency selectivity or the spatial channel rank, for instance, cannot be included.

For this reason, there is a second communication possibility for communicating channel state information, which is the physical uplink shared channel (PUSCH). The PUSCH is, as opposed to the PUCCH, scheduled, that is, the base station allocates, i.e., schedules, communication resources on the PUSCH to user entities. In other words, a mobile terminal can only transmit on this channel after having been granted a communication resource by the base station. Once granted, the payload of this channel is typically much larger than the 10 bits of a PUCCH message, and thereby more detailed channel state information can be conveyed to the base station.

Depending on the characteristics of a particular channel, the small payload size of a PUCCH message may not be enough to accurately describe the channel characteristics, with the result that some users will underperform if only the PUCCH is used by the base station. For instance, the PUCCH message can only contain one 5-bit CQI value if a precoding matrix indicator (3-4 bits) is also transmitted.

Examples of characteristics that can not be transmitted include the potential spatial richness of the channel, which can never be exploited if only the short message structure is employed, since a rank indicator along with more CQI information (covering multiple spatial streams) would be needed. Therefore, users experiencing such channel characteristics typically will underperform if only transmitting channel information as a PUCCH message.

Further, the potential richness of the channel in frequency can not be exploited either if only a short message structure is employed, since separate CQI values covering multiple frequency bands can not be used.

In order to accommodate for channel characteristics such as the ones described above, the base station can schedule resources on the PUSCH to certain users for the transmission of additional detailed channel state information. These resources can typically be used to transmit information conveying the richness of the radio channel in space and/or frequency.

Typically, however, all users can not be simultaneously scheduled to transmit additional channel state information on the PUSCH, e.g., for reasons of limited uplink capacity and since the base station has no direct knowledge as to which users would benefit most from providing a more detailed channel state information over the high-payload PUSCH.

Further, it is not at all certain that all users would benefit from such additional transmissions of channel state information. The small size PUCCH message may typically suffice for users with channels that are not rich, and little may be gained in terms of downlink performance by having such users transmitting more detailed channel state information. Instead, the cost by utilizing the PUSCH can be large since it takes valuable resources of the uplink.

One solution to this problem would be concatenate several short messages (several PUCCH transmissions) to one larger message in order to allow transmission of further relevant channel state information. However, the information would arrive at the base station with a larger delay, and thereby there is a risk of the information being obsolete.

3GPP's standard TS 36.213 (3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE; no. V2.1.0, 1 September 2007) discloses a method for communicating channel state information in a communication system, including at least one radio transmitter for providing a communication link to at least one user entity, including a first communication resource for transmitting channel state information to the radio transmitter from the user entity, and a second communication resource for transmitting additional channel state information to the radio transmitter from the user entity.

Consequently, there exists a need for an improved method for communicating channel state information in a communication system.

## Summary of the Invention

It is an object of the present invention to provide a method of communicating channel state information in a communication system that solves or at least mitigates the above mentioned problems. This object is achieved by a method according to claim 1.

It is a further object of the present invention to provide a communication system that solves or at least mitigates the above mentioned problems. This object is achieved by a communication system according to claim 9.

According to the present invention, it is provided a method of communicating channel state information in a communication system. The communication system includes a first communication resource for transmitting channel state information to a serving radio transmitter from a user entity, and a second communication resource for transmitting additional channel state information to the radio transmitter from the user entity. The method is characterized in the step of, from the user entity, in a first message on the first communication resource, transmitting an indication indicating whether the user entity has channel state information to be communicated on the second communication resource.

This method has the advantage that the radio transmitter can be "told" whether the user entity has, or at least considers itself to have, more channel state information than can be transmitted on the first communication, and whether transmission of the additional information would improve channel quality and thereby improve, e.g., data throughput or SNR.

In one embodiment, the communication on the second communication resource is controlled by the serving radio transmitter, and the indication allows for the radio transmitter to schedule resources on the second communication resource based on the indication transmitted on the first communication resource, so that user entity that would benefit from transmitting further information also are able to transmit a more detailed report regarding the channel measurements.

This embodiment also has the advantage that the load on the second communication resource can be reduced, or at least be utilized in a more efficient manner. In the prior art, the base station can blindly schedule a user on the second communication resource (e.g., a PUSCH channel) to obtain a more detailed channel state information and thereby be able to judge whether this user benefits from future channel state information reporting over the second communication resource. This probing, however can be costly since each transmission adds to the overhead of the uplink and reduces the uplink capacity of the cellular system.

According to the invention, the radio transmitter need not schedule resources in a "blind" manner, but can schedule resources to those user entities having the highest use of such transmissions. In one embodiment, the indication is quantified with regard to the use of transmitting further information, so that the radio transmitter in the first place can schedule resources to user entities that would benefit the most of transmitting additional channel state information in contrast to a "blind" scheduling, which has the probable result that resources arc scheduled to users that do not benefit, or at least to a lesser extent than other users, from transmitting further information.

The invention also relates to a user entity.

Further characteristics of the present invention, and advantages thereof, will be evident from the following detailed description of preferred embodiments and appended drawings, which are given by way of example only, and are not to be construed as limiting in any way.

## Brief Description of the Drawings

Fig. 1 discloses an example of an E-UTRA system in which the present invention may advantageously be utilised.

Fig. 2 discloses an exemplary method according to the invention.

Fig. 3 schematically illustrates the structure of a PUCCH feedback message according to the invention.

## Detailed Description of the Invention

Although applicable in various kinds of cellular communication systems, the present invention will be described with reference to the 3rd Generation Partnership Program (3GPP) cellular communication system, which presently is called the Evolved Universal Terrestrial Radio Access (E-UTRA) or Long Term Evolution (LTE).

Further, in the present description and claims, the term network entity is to be interpreted as a radio access node, such as a radio base station, or a backbone network node. Also smaller home base stations are to be included in the term network entity. Mobile user entities such as mobile phones, smartphones or handheld computers having communication capabilities, are not included in the term network entity as used in this description and the following claims.

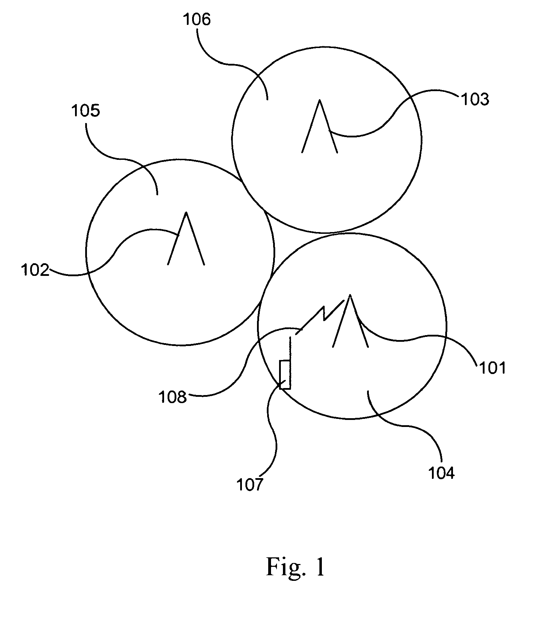

An example of a simplified architecture of an E-UTRA system 100 is shown in fig. 1, and discloses radio base stations 101-103 (stationary radio transceivers for duplex communication or, as the case may be, radio transmitters for downlink only mode communication. In the figure, the base stations are provided with radio transceivers). In E-UTRA, the base stations are called eNBs (enhanced Node B) 101-103. A user entity (UE) 107 connects to the system by means of a radio interface 108, e.g. an Uu interface. The eNBs 101-103 handles communication over the radio interface in a certain coverage area, i.e., cells 104-106, which is the area wherein the radio signal is strong enough to allow a satisfactory communication with UEs within the area.

When the UE 107 moves around in the coverage area provided by the communication system, the channel characteristics of the downlink that the UE 107 experiences will vary. This variation depends on a plurality of factors. For example, the signal usually deteriorates when the UE 107 moves towards the boundary of the serving cell, e.g. due to the increasing distance. There may also be rapid channel quality changes. Further, urban environments normally suffer from Rayleigh fading, which is characterized by small spotty areas with very bad reception. The connection can also be suddenly obstructed by a large building or other objects in the urban environment. The channel characteristics are further complicated by the fact that a channel can have a broadband nature and comprise a plurality of different frequencies, where some of the frequencies can exhibit good channel characteristics, while other frequencies exhibit poor characteristics. Even further, the channel can also be spatially rich, i.e., comprise a plurality of spatial streams.

In order to fully benefit from the downlink communication, the downlink channel should as much as possible be adapted to the particular UE, i.e., if the channel has a high spatial richness (the term richness here refers to the number of independent paths by which a codeword is received, and is also a measure for the frequency selectivity of the channel and/or number of parallel layers (the rank of the transmission) that can be transmitted in the E-UTRA downlink), this can be utilized to transmit data in parallel streams to increase throughput. In order to utilize the spatial richness, however, the base station must be aware of the downlink characteristics to be able to properly take advantage of its possibilities. Likewise, the characteristics of frequency selectivity are important to have knowledge of in the base station, since the use of frequencies exhibiting poor characteristics at the location of the user entity wastes valuable communication resources.

As was mentioned above, channel state information is planned for transmission from user entity to base station in two separate channels in E-UTRA. However, in order to exploit the potential spatial richness, and frequency selectivity, of the channel, signalling on the above described short message structure (PUCCH) is not enough, but signalling on the PUSCH is required, which imposes the above described problems of scheduling of resources to users that do not really need to transmit additional channel state information.

Consequently, there exists a problem in how to design a system in order to make the base station aware of which users gain from having more detailed channel state information transmitted to the base station.

It can be envisaged a solution where the base stations schedule resources on the PUSCH if a certain time has passed since the last report, or based on the data rate, speed or other known characteristic of the user, or the scheduling urgency, e.g., if the UE needs to receive data or not, or buffer state of the user. Such solutions, however, are still far from optimized.

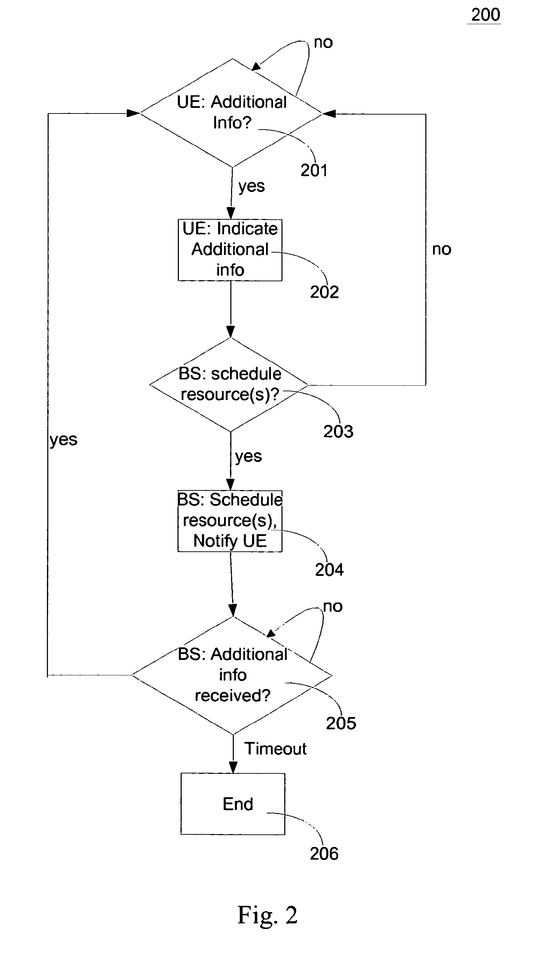

The present invention solves, or at least mitigates this problem, and a method 200 according to a first exemplary embodiment of the present invention is disclosed in fig. 2. Due to the detailed downlink channel estimation that is performed in the user entity, the user entity is well aware of whether it underperforms or not with respect to channel feedback information that can be transmitted in the PUCCH, and thereby whether transmission of additional channel information data would increase the possibilities of obtaining better channel characteristics, and whether the user entity would also benefit from better channel characteristics.

According to the invention, the base station grant uplink channel transmission to those users that would benefit from having detailed channel state information known at the base station transmitter, and does not grant uplink channel transmission to those users that would not benefit from the base station having such detailed channel information.

The method starts in step 201, where channel parameters continuously are analyzed in order to determine whether channel performance is sufficient, or whether the user entity would benefit from an improved channel quality. The user entity also continuously, e.g. periodic or aperiodic, transmits limited channel state information on the PUCCH in order to provide the base station with at least limited knowledge of the channel characteristics.

If the UE determines that transmitting information on the PUCCH is not sufficient to properly describe the channel, e.g. if the rank of the channel (either the rank in the frequency domain, or the spatial rank) is so large that sufficient channel state information can not be transmitted as one or more PUCCH messages, the UE decides that it would benefit from transmitting additional channel state information and the method continues to step 202, where the UE indicates to the base station that it has further data to transmit.

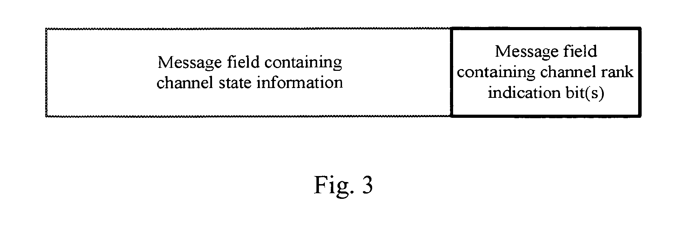

The indication is, in this example, transmitted as part of a PUCCH message. For example, one or a few bits (in the following referred to as indicator bits) can be reserved for the indication of whether the size of the PUCCH message is sufficient for the signalling of channel information, or whether a PUCCH cannot contain the most relevant channel state information. A schematic structure of the PUCCH feedback message is shown in fig. 3. For example, in a one-bit solution, the bit value of a specified bit in the PUCCH message can be set to "0" if there is no further data to transmit, or "1" if there is further data to transmit. Consequently, in the described example, the UE sets the specified bit, e.g. the very first or last bit in the message to "1" in a PUCCH message in step 202. In step 203 the base station reads the indication, which in one embodiment is interpreted as a request for more (scheduled) resources for the transmission of additional detailed channel state information. Based on the indicator bit(s), the base station decides whether to schedule uplink resources for feedback of additional detailed channel state information to the UE. If the base station decides not to schedule any additional resources, e.g. if there are no resources available, or if there are other users having a higher need of such resources (the need can be quantified if more than one bit is used as indication), as will be described below, the method returns to step 201 to start all over again. If, on the other hand, the base stations decide to schedule resources to the UE, the method continues to step 204, where resources are scheduled to the UE. The UE then transmits the additional data over the scheduled uplink channel in, e.g., a PUSCH message, and when the additional data has been received, in step 205, the base station can change transmission parameters in order to improve downlink channel quality. When the additional information has been retrieved, the method returns to step 201. If the additional information is not received within a predetermined period of time, the process ends in step 206, optionally notifying the UE of the failure to receive the transmission. The invention consequently has the advantage that the base station can grant uplink channel transmission right to those users that would benefit from having detailed channel state information known at the base station transmitter.

The invention also has a further advantage. When the process returns from step 205 to step 201, the UE is aware of that it has transmitted, e.g., a full channel description. Consequently, the UE is also aware of whether it underperforms or not with respect to the detailed channel feedback information that was transmitted on the high-load PUSCH channel. Therefore, the UE can also compare current channel status with the transmitted detailed channel status, and for as long as there is no substantial change, the indication in the PUCCH message can be set to indicate that there is no further data to be transmitted. This also has the advantage that UEs having transmitted detailed channel status information can maintain such a setting of the indication for a period of time, thereby avoiding unnecessary loading of the PUSCH channel. If it is later determined that the channel characteristics have changed to such extend that a new detailed transmission would be beneficial for the UE, the indication can again be set to indicate that there is further data to be transmitted.

If only one bit is used to signal the indication, the base station can not prioritize users having additional data to transmit. Therefore, in an alternative embodiment, two or more bits are used to signal the need for further transmission. The use of two or more bits has the advantage that the urge for transmitting more data can be classified.

Consequently, the UE can quantify the potential benefit of signalling additional information. If, for example, three bits are used, the potential benefit can be quantified in eight levels, one of which indicating no additional data to transmit. The base station can use the remaining seven levels to schedule a user for uplink feedback based on the level. If there is a plurality of users indicating or requesting scheduling of additional communication resources, lower level indications may not be granted additional resources. In particular, the indicator bit(s) can explicitly indicate a CQI transmission request, relate to the spatial channel rank, relate to the frequency selectivity of the channel, relate to the MIMO precoding matrix (matrices), or relate to the channel quality/SNR. The indicator bit(s) can also relate to the transmission method (spatial multiplexing, or transmit-diversity). The indicator bit(s) can also be arranged to indicate that the user's data rate could be increased by a certain amount or fraction if more channel state information would be available at the base station transmitter, where different bit settings can indicate different amounts (fractions).

In order to determine whether an indication of a transmission of further data should be transmitted by a UE, the UE preferably calculates a measure of the potential improvement that would be obtained by transmitting additional information, and compares the measure with a threshold. This ensures that there is a requirement for transmitting the indication, since otherwise there is a risk that all user entities transmit an indication, irrespective of if a channel improvement would actually be beneficial to the user.

The measure can, for example, be calculated as:

$$\Delta C = f(\text{large PUCCH message}) - f(\text{short PUSCH message}) \quad , \qquad (1)$$

where $f(\ )$ e.g. indicates a signal to noise ratio or throughput.

As is stated above, an alternative solution is to compare with a previously transmitted PUSCH instead of comparing with the short PUSCH message, since if the UE has recently transmitted such a message, it can be assumed that this detailed information is still valid and used by the system. Consequently, the measure can be calculated as:

$$\Delta C = f(\text{large PUSCH message}) - f(\text{previous large PUSCH message}). \qquad (2)$$

The comparison with a previously transmitted PUSCH can be arranged to be performed only if that transmission was performed recently, and otherwise compare with the PUCCH message as stated above.

Another solution is to compare with the transmission possibilities the UE is actually offered by the system. In this case, the UE detects that the system offers a certain transmission possibility, but that there is a potential improvement if other transmission possibilities were allowed, for example by using other frequencies than suggested by the system.

The user entity can then compare $\Delta C$ with a threshold. For example, if only one indicator bit b is used, according to the following:

$$b = \begin{cases} 0 & \Delta C < T \\ 1 & \Delta C \geq T \end{cases} \qquad (2)$$

If $\Delta C$ is higher than the threshold, an indication is transmitted. If more than one bit is used, the value of $\Delta C$ can be used to set the bits properly so that a user having a higher $\Delta C$ will be prioritized over a user having a lower $\Delta C$, i.e., multiple thresholds are used.

The threshold value $T$ can either be fixed or be assigned by the system to all users in a cell, for instance over a broadcast downlink channel. It is also possible to have a threshold value (or values) that is arranged to vary in dependence of, for example, time of day or the particular location where the user entity is being present. If, for example, the user entity is in a user entity dense area, there is a high probability that most or all user entities have a desire to transmit additional data. In such situations, the threshold(s) can be raised so that at all times a proper proportion of the user entities are allowed to request transmission of additional channel information data. Further, one or more threshold values can be transmitted to the user entity through higher-layer signalling in one or more dedicated channels. In this way, different users in the same cell can be provided with different thresholds, e.g., to prioritize certain users, or certain groups of users.

Although the invention has been disclosed in connection with an E-UTRA (LTE) system above using PUCCH and PUSCH channels, it is, of course, also possible to use other channels. For example, the additional information can be transmitted on any scheduled resource, and not necessarily on a PUSCH resource.

Further, although the invention has been disclosed in connection with an E-UTRA (LTE) system above, the invention is equally applicable in any system comprising at least two ways of transmitting channel state information from a user entity to a network entity, where at least one of the communication ways can only be used by the user entity when being permitted by the system.

**Claims**

1.  Method of communicating channel state information in a communication system, comprising at least one radio transmitter (101-103) for providing a communication link to at least one user entity (107), when in the coverage area of the radio transmitter (101-103), wherein the communication system comprises a first communication resource for transmitting channel state information to the radio transmitter (101-103) from the user entity (107), and a second communication resource for transmitting additional channel state information to the radio transmitter (101-103) from the user entity (107), **characterized in** the step of, from said user entity (107), in a first message on said first communication resource, transmitting an indication indicating whether the user entity (107) has additional channel state information to be communicated on said second communication resource.

2.  Method according to claim 1, **characterized in that** communication on the second communication resource is controlled by the radio transmitter by scheduling resources to the user entity.

3.  Method according to claim 2, **characterized in that** it further comprises the step of scheduling a resource to the user entity on said second communication resource based on the indication.

4.  Method according to claim 1, **characterized in that** said indication is transmitted as a bit indication in the first message, wherein the indication of one or more bits in the first message indicates whether there is further channel information.

**5.** Method according to claim 4, **characterized in that** a plurality of bits is used for transmitting the indication, wherein the one or more bits indicates a quantification of the potential improvement of the downlink transmission from the radio transmitter to the user entity.

**6.** Method according to claim 1, **characterized in that** said indication is a request to the radio transmitter to grant or schedule a transmission of additional channel state information on said second communication resource.

**7.** Method according to claim 1, **characterized in that** said additional channel state information relates to one or more from the group:

- a spatial channel rank indicated in the first message;
- a MIMO precoding matrix indicated in the first message;
- a channel quality indicated in the first message;
- a transmission method indicated in the first message;
- use of dynamic or static MIMO precoding; and/or
- the use of cyclic delay diversity.

**8.** Method according to claim 1, **characterized in that** prior to the transmission of said first message, the user entity compares a potential channel improvement with one or more threshold values, wherein said first message is transmitted if said improvement exceeds an improvement indicated by one or more of the threshold values.

**9.** Communication system for communicating channel state information, comprising at least one radio transmitter (101-103) for providing a communication link to at least one user entity (107), when in the coverage area of the radio transmitter (101-103), wherein the communication system comprises a first communication resource for transmitting channel state information to the radio transmitter (101-103) from the user entity (107), and a second communication resource for transmitting additional channel state information to the radio transmitter (101-103) from the user entity (107), **characterized in that** the radio transmitter (101-103) comprises means for, in a first message on said first communication resource from said user entity (107), receiving an indication indicating whether the user entity (107) has additional channel state information to be communicated on said second communication resource.

**10.** System according to claim 9, **characterized in that** the radio transmitter further comprises means for allocating a resource to the user entity on said second communication resource based on the indication.

**11.** User entity for communicating channel state information in a communication system, said system comprising at least one radio transmitter (101-103) for providing a communication link to the user entity (107), when in the coverage area of the radio transmitter (101-103), wherein the communication system comprises a first communication resource for transmitting channel state information to the radio transmitter (101-103) from the user entity (107), and a second communication resource for transmitting additional channel state information to the radio transmitter (101-103) from the user entity (107), **characterized in that** the user entity (107) comprises means for transmitting, in a first message on said first communication resource, an indication indicating whether the user entity (107) has additional channel state information to be communicated on said second communication resource.

**12.** User entity according to claim 11, **characterized in that** the user entity comprises means for transmitting said indication as a bit indication in the first message, wherein the indication of one or more bits in the first message is arranged to indicate whether there is further channel information.

**13.** User entity according to claim 12, **characterized in that** a plurality of bits is arranged to be used for transmitting the indication, wherein the one or more bits are arranged to indicate a quantification of the potential improvement of the downlink transmission from the radio transmitter to the user entity.

**14.** User entity according to claim 11, **characterized in that** said indication is arranged to be a request to the radio transmitter to grant or schedule a transmission of additional channel state information on said second communication resource.

**15.** User entity according to claim 11, **characterized in that** the user entity comprises means for, prior to the transmission of said first message, comparing a potential channel improvement with one or more threshold values, wherein said first message is arranged to be transmitted if said improvement exceeds an improvement indicated by one or more of the threshold values.

**Patentansprüche**

1. Verfahren zum Übermitteln von Kanalzustandsinformationen in einem Kommunikationssystem, das wenigstens einen Funksender (101-103) umfasst, um eine Kommunikationsverbindung mit wenigstens einer Benutzereinheit (107) bereitzustellen, wenn sie sich im Versorgungsbereich des Funksenders (101-103) befindet, wobei das Kommunikationssystem eine erste Kommunikationsressource zum Übermitteln von Kanalzustandsinformationen von der Benutzereinheit (107) an den Funksender (101-103) und eine zweite Kommunikationsressource zum Übermitteln zusätzlicher Kanalzustandsinformationen von der Benutzereinheit (107) an den Funksender (101-103) umfasst, **dadurch gekennzeichnet, dass** von der Benutzereinheit (107) über die erste Kommunikationsressource in einer ersten Nachricht ein Hinweis gesendet wird, der angibt, ob die Benutzereinheit (107) zusätzliche Kanalzustandsinformationen zur Übermittlung über die zweite Kommunikationsressource hat.

2. Verfahren gemäß Anspruch 1, **dadurch gekennzeichnet, dass** Kommunikation über die zweite Kommunikationsressource durch den Funksender gesteuert wird, indem für die Benutzereinheit Ressourcen eingeplant werden.

3. Verfahren gemäß Anspruch 2, **dadurch gekennzeichnet, dass** das Verfahren ferner den Schritt des Einplanens einer Ressource für die Benutzereinheit auf der zweiten Kommunikationsressource auf Basis des Hinweises umfasst.

4. Verfahren gemäß Anspruch 1, **dadurch gekennzeichnet, dass** der Hinweis als ein Bithinweis in der ersten Nachricht gesendet wird, wobei der Hinweis aus einem oder mehreren Bits in der ersten Nachricht anzeigt, ob es weitere Kanalinformationen gibt.

5. Verfahren gemäß Anspruch 4, **dadurch gekennzeichnet, dass** eine Mehrzahl von Bits zum Senden des Hinweises verwendet wird, wobei das eine oder die mehreren Bits eine Quantifizierung der potenziellen Verbesserung der Abwärtsstrecken-Übertragung vom Funksender zur Benutzereinheit angibt.

6. Verfahren gemäß Anspruch 1, **dadurch gekennzeichnet, dass** der Hinweis eine Anforderung an den Funksender ist, eine Übermittlung von zusätzlichen Kanalzustandsinformationen über die zweite Kommunikationsressource zu gewähren oder einzuplanen.

7. Verfahren gemäß Anspruch 1, **dadurch gekennzeichnet, dass** die zusätzlichen Kanalzustandsinformationen ein oder mehrere Elemente der folgenden Gruppe betreffen:

   - einen räumlichen Kanalrang, der in der ersten Nachricht angegeben wird;
   - eine MIMO-Vorkodierungsmatrix, die in der ersten Nachricht angegeben wird;
   - eine Kanalqualität, die in der ersten Nachricht angegeben wird;
   - ein Übertragungsverfahren, das in der ersten Nachricht angegeben wird;
   - Verwendung von dynamischer oder statischer MIMO-Vorkodierung; und/oder
   - Verwendung von zyklischer Verzögerungsdiversität ("Cyclic Delay Diversity").

8. Verfahren gemäß Anspruch 1, **dadurch gekennzeichnet, dass** die Benutzereinheit vor dem Senden der ersten Nachricht eine mögliche Kanalverbesserung mit einem oder mehreren Schwellenwerten vergleicht, wobei die erste Nachricht gesendet wird, wenn diese Verbesserung eine durch einen oder mehrere der Schwellenwerte angezeigte Verbesserung überschreitet.

9. Kommunikationssystem zum Kommunizieren von Kanalzustandsinformationen, das wenigstens einen Funksender (101-103) umfasst, um eine Kommunikationsverbindung mit wenigstens einer Benutzereinheit (107) bereitzustellen, wenn sie sich im Versorgungsbereich des Funksenders (101-103) befindet, wobei das Kommunikationssystem eine erste Kommunikationsressource zum Übermitteln von Kanalzustandsinformationen von der Benutzereinheit (107) an den Funksender (101-103) und eine zweite Kommunikationsressource zum Übermitteln zusätzlicher Kanalzustandsinformationen von der Benutzereinheit (107) an den Funksender (101-103) umfasst, **dadurch gekennzeichnet, dass** der Funksender (101-103) Mittel zum Empfangen, in einer von der Benutzereinheit (107) über die erste Kommunikationsressource gesendeten ersten Nachricht, eines Hinweises umfasst, der angibt, ob die Benutzereinheit (107) zusätzliche Kanalzustandsinformationen zur Übermittlung über die zweite Kommunikationsressource hat.

10. System gemäß Anspruch 9, **dadurch gekennzeichnet, dass** der Funksender ferner Mittel zum Zuteilen einer Ressource an die Benutzereinheit auf der zweiten Kommunikationsressource auf Basis des Hinweises umfasst.

11. Benutzereinheit zum Übermitteln von Kanalzustandsinformationen in einem Kommunikationssystem, wobei das System wenigstens einen Funksender (101-103) umfasst, um eine Kommunikationsverbindung mit der Benutzereinheit (107) bereitzustellen, wenn sie sich im Versorgungsbereich des Funksenders (101-103) befindet, wobei das Kommunikationssystem eine erste Kommunikationsressource zum Übermitteln von Kanalzustandsinformationen von der Benutzereinheit (107) an den Funksender (101-103) und eine zweite Kommunikationsressource zum Übermitteln zusätzlicher Kanalzustandsinformationen von der Benutzereinheit (107) an den Funksender (101-103) umfasst, **dadurch gekennzeichnet, dass** die Benutzereinheit (107) Mittel umfasst zum Senden, in einer ersten Nachricht über die erste Kommunikationsressource, eines Hinweises, der angibt, ob die Benutzereinheit (107) zusätzliche Kanalzustandsinformationen zur Übermittlung über die zweite Kommunikationsressource hat.

12. Benutzereinheit gemäß Anspruch 11, **dadurch gekennzeichnet, dass** die Benutzereinheit Mittel zum Senden des Hinweises als ein Bithinweis in der ersten Nachricht umfasst, wobei der Hinweis aus einem oder mehreren Bits in der ersten Nachricht ausgelegt ist anzugeben, ob es weitere Kanalinformationen gibt.

13. Benutzereinheit gemäß Anspruch 12, **dadurch gekennzeichnet, dass** eine Mehrzahl von Bits ausgelegt ist, zum Senden des Hinweises verwendet zu werden, wobei das eine oder die mehreren Bits ausgelegt sind, eine Quantifizierung einer potenziellen Verbesserung der Abwärtsstrecken-Übertragung von dem Funksender zur Benutzereinheit anzugeben.

14. Benutzereinheit gemäß Anspruch 11, **dadurch gekennzeichnet, dass** der Hinweis ausgelegt ist, eine Anforderung an den Funksender zu sein, eine Übermittlung von zusätzlichen Kanalzustandsinformationen auf der zweiten Kommunikationsressource zu gewähren oder einzuplanen.

15. Benutzereinheit gemäß Anspruch 11, **dadurch gekennzeichnet, dass** die Benutzereinheit Mittel umfasst, um vor dem Senden der ersten Nachricht eine mögliche Kanalverbesserung mit einem oder mehreren Schwellenwerten zu vergleichen, wobei die erste Nachricht ausgelegt ist, gesendet zu werden, wenn diese Verbesserung eine durch einen oder mehrere der Schwellenwerte angezeigte Verbesserung überschreitet.

## Revendications

1. Procédé de communication d'informations d'état de canal dans un système de communication, comprenant au moins un émetteur radio (101-103) pour fournir une liaison de communication à au moins une entité utilisatrice (107), quand elle se trouve dans la zone de couverture de l'émetteur radio (101-103), dans lequel le système de communication comprend une première ressource de communication pour transmettre des informations d'état de canal à l'émetteur radio (101-103) depuis l'entité utilisatrice (107) et une seconde ressource de communication pour transmettre des informations d'état de canal supplémentaires à l'émetteur radio (101-103) depuis l'entité utilisatrice (107), **caractérisé par** l'étape de transmission, depuis ladite entité utilisatrice (107), dans un premier message sur ladite première ressource de communication, d'une indication indiquant que l'entité utilisatrice (107) comporte ou non des informations d'état de canal supplémentaires à communiquer sur ladite seconde ressource de communication.

2. Procédé selon la revendication 1, **caractérisé en ce que** la communication sur la seconde ressource de communication est commandée par l'émetteur radio en ordonnançant des ressources pour l'entité utilisatrice.

3. Procédé selon la revendication 2, **caractérisé en ce qu'**il comprend en outre l'étape d'ordonnancement d'une ressource pour l'entité utilisatrice sur ladite seconde ressource de communication en fonction de l'indication.

4. Procédé selon la revendication 1, **caractérisé en ce que** ladite indication est transmise sous forme d'une indication binaire dans le premier message, l'indication d'un ou de plusieurs bits dans le premier message indiquant qu'il existe ou non d'autres informations de canal.

5. Procédé selon la revendication 4, **caractérisé en ce qu'**une pluralité de bits est utilisée pour transmettre l'indication, les un ou plusieurs bits indiquant une quantification de l'amélioration potentielle de la transmission de liaison descendante depuis l'émetteur radio vers l'entité utilisatrice.

6. Procédé selon la revendication 1, **caractérisé en ce que** ladite indication est une requête auprès de l'émetteur radio d'octroi ou d'ordonnancement d'une transmission d'informations d'état de canal supplémentaires sur ladite seconde ressource de communication.

7. Procédé selon la revendication 1, **caractérisé en ce que** lesdites informations d'état de canal supplémentaires se rapportent à un ou plusieurs du groupe constitué par :

   - un rang de canal spatial indiqué dans le premier message ;
   - une matrice de précodage MIMO indiquée dans le premier message ;
   - une qualité de canal indiquée dans le premier message ;
   - un procédé de transmission indiqué dans le premier message ;
   - une utilisation d'un précodage MIMO dynamique ou statique ; et/ou
   - l'utilisation d'une diversité à retard cyclique.

8. Procédé selon la revendication 1, **caractérisé en ce que**, avant la transmission dudit premier message, l'entité utilisatrice compare une amélioration de canal potentielle à une ou plusieurs valeurs limites, ledit premier message étant transmis si ladite amélioration dépasse une amélioration indiquée par une ou plusieurs des valeurs limites.

9. Système de communication pour communiquer des informations d'état de canal, comprenant au moins un émetteur radio (101-103) pour fournir une liaison de communication à au moins une entité utilisatrice (107), quand elle se trouve dans la zone de couverture de l'émetteur radio (101-103), le système de communication comprenant une première ressource de communication pour transmettre des informations d'état de canal à l'émetteur radio (101-103) depuis l'entité utilisatrice (107), et une seconde ressource de communication pour transmettre des informations d'état de canal supplémentaires à l'émetteur radio (101-103) depuis l'entité utilisatrice (107), **caractérisé en ce que** l'émetteur radio (101-103) comprend un moyen pour recevoir, dans un premier message sur ladite première ressource de communication, depuis ladite entité utilisatrice (107) une indication indiquant que l'entité utilisatrice (107) comporte ou non des informations d'état de canal supplémentaires à communiquer sur ladite seconde ressource de communication.

10. Système selon la revendication 9, **caractérisé en ce que** l'émetteur radio comprend en outre un moyen d'attribution d'une ressource à l'entité utilisatrice sur ladite seconde ressource de communication en fonction de l'indication.

11. Entité utilisatrice pour communiquer des informations d'état de canal dans un système de communication, ledit système comprenant au moins un émetteur radio (101-103) pour fournir une liaison de communication à l'entité utilisatrice (107), quand elle se trouve dans la zone de couverture de l'émetteur radio (101-103), le système de communication comprenant une première ressource de communication pour transmettre des informations d'état de canal à l'émetteur radio (101-103) depuis l'entité utilisatrice (107) et une seconde ressource de communication pour transmettre des informations d'état de canal supplémentaires à l'émetteur radio (101-103) depuis l'entité utilisatrice (107), **caractérisé en ce que** l'entité utilisatrice (107) comprend un moyen pour transmettre, dans un premier message sur ladite première ressource de communication, une indication indiquant que l'entité utilisatrice (107) comporte ou non des informations d'état de canal supplémentaires à communiquer sur ladite seconde ressource de communication.

12. Entité utilisatrice selon la revendication 11, **caractérisée en ce que** l'entité utilisatrice comprend un moyen de transmission de ladite indication sous forme d'une indication binaire dans le premier message, l'indication d'un ou de plusieurs bits dans le premier message étant agencée pour indiquer qu'il existe ou non d'autres informations de canal.

13. Entité utilisatrice selon la revendication 12, **caractérisée en ce qu'**une pluralité de bits est agencée pour servir à transmettre l'indication, les un ou plusieurs bits étant agencés pour indiquer une quantification de l'amélioration potentielle de la transmission de liaison descendante depuis l'émetteur radio vers l'entité utilisatrice.

14. Entité utilisatrice selon la revendication 11, **caractérisée en ce que** ladite indication est agencée pour être une requête auprès de l'émetteur radio d'octroi ou d'ordonnancement d'une transmission d'informations d'état de canal supplémentaires sur ladite seconde ressource de communication.

15. Entité utilisatrice selon la revendication 11, **caractérisée en ce que** l'entité utilisatrice comprend un moyen pour, avant la transmission dudit premier message, comparer une amélioration de canal potentielle à une ou plusieurs valeurs limites, ledit premier message étant agencé pour être transmis si ladite amélioration dépasse une amélioration indiquée par une ou plusieurs des valeurs limites.

Fig. 1

200

no

UE: Additional
Info?

201

yes

UE: Indicate
Additional
info

202

no

BS: schedule
resource(s)?

203

yes

yes

BS: Schedule
resource(s),
Notify UE

204

no

BS: Additional
info
received?

205

Timeout

End

206

Fig. 2

| Message field containing channel state information | Message field containing channel rank indication bit(s) |

Fig. 3

## REFERENCES CITED IN THE DESCRIPTION

**Non-patent literature cited in the description**

- 3GPP's standard TS 36.213 (3RD GENERATION PARTNERSHIP PROJECT (3GPP). MOBILE COMPETENCE CENTRE, 01 September 2007